# EUROPÄISCHE PATENTSCHRIFT

(11) **EP 2 864 095 B1**
(45) Veröffentlichungstag und Bekanntmachung des Hinweises auf die Patenterteilung: **06.04.2016**
(21) Anmeldenummer: 13728976.5
(22) Anmeldetag: 12.06.2013
(51) Int. Cl.: B29C 45/14, B29C 45/26, B29C 45/37, B60R 19/48, G01S 13/93, H01Q 1/02, H01Q 1/32, H05B 3/20

(54) **SPRITZGUSSVERFAHREN ZUR HERSTELLUNG EINES SPRITZGEGOSSENEN VERKLEIDUNGSELEMENTS FÜR EIN KRAFTFAHRZEUG**
INJECTION MOLDING METHOD FOR PRODUCING AN INJECTION-MOLDED CLADDING ELEMENT FOR A MOTOR VEHICLE
PROCÉDÉ DE MOULAGE PAR INJECTION POUR LA FABRICATION D'UN ÉLÉMENT D'HABILLAGE MOULÉ PAR INJECTION POUR UN VÉHICULE AUTOMOBILE

(30) Priorität: 26.06.2012 DE 102012105564
(43) Veröffentlichungstag der Anmeldung: 29.04.2015
(73) Patentinhaber: REHAU AG + Co, 95111 Rehau (DE)
(72) Erfinder: RIEPENHAUSEN, Holm, 95111 Rehau (DE)
(86) Internationale Anmeldenummer: PCT/EP2013/001738
(87) Internationale Veröffentlichungsnummer: WO 2014/000863

(56) Entgegenhaltungen:
- EP-A1- 2 179 836
- EP-A2- 1 646 266
- WO-A1-2005/009796
- WO-A1-2007/009513
- WO-A1-2008/031657
- JP-A- 2006 032 137
- US-A1- 2008 023 878

## Beschreibung

Die vorliegende Erfindung betrifft ein Spritzgussverfahren zur Herstellung eines spritzgegossenen Verkleidungselementes für ein Kraftfahrzeug. Bei der Herstellung von spritzgegossenen Verkleidungselementen für ein Kraftfahrzeug einer Modellreihe müssen variantenbedingt bei einem Teil der Verkleidungselemente Heizfolien vorgesehen werden. Diese ermöglichen es das Verkleidungselement lokal beheizen zu können, um die Bildung von Eis, Schnee oder Wasserschichten auf diesem lokalen Bereich des Verkleidungselementes zu verhindern bzw. diese störenden Umwelteinflüsse von der Oberfläche des Verkleidungsteils lokal zu entfernen. Dies meist mit dem Zweck den lokalen Bereich für den störungsfreien Durchgang einer elektromagnetischen Strahlung frei zu halten. Die Heizfolie wird hierbei auf der der Sichtseite abgewandten Rückseite des Verkleidungselements (z.B. einer Stoßfängerverkleidung) mittels einer Klebstoffschicht angeordnet, wie zum Beispiel aus der EP 1 646 266 bekannt. Nachteilig ist hierbei, dass die Heizfolie selbst aufwendig (z.B. mittels zusätzlich umlaufender Kleberaupen)vor Umwelteinflüssen wie Wasser- oder Staubzutritt geschützt werden muss. Zudem können sich bei der Verklebung der Heizfolie innerhalb der Klebstoffschicht Luftgefüllte Hohlräume bilden, wobei diese Hohlräume zu einer ungleichmäßigen Aufheizung des Verkleidungselementes und gegebenenfalls zu störenden Reflektionen der elektromagnetische Strahlung führen.

Ansätze, die Heizfolie in die Wandstärke des Verkleidungselementes direkt zu integrieren führen dazu, dass diese zwar vor Umwelteinflüssen geschützt ist, es durch die Herstellung des Verkleidungselementes im Spritzguss jedoch unweigerlich dazu kommt, dass die Heizfolie sich auf der Oberfläche des spritzgegossenen Verkleidungselementes abzeichnet. Dieser Effekt wird durch eine nachträgliche Lackierung, die üblicherweise an derartigen Verkleidungselementen für ein Kraftfahrzeug vorgenommen werden, noch verstärkt und führt zu einem seitens eines Kunden nicht akzeptablen Oberflächeneindrucks des Verkleidungselementes.

Verfahren zum Hinterspritzen von Heizfolien sind aus der WO2007009513 und der JP2006032137 bekannt. Die WO2008031657 offenbart ein Verfahren, bei dem ein Folienmodul zum Hinterspritzen in eine Vertiefung eines Formwerkzeuges eingelegt wird. Die Verwendung von Wechseleinsätzen, um im selben Formwerkzeug kaschierte oder unkaschierte Formteile herstellen zu können, ist aus der WO2005009796 bekannt.

Die vorliegende Erfindung stellt sich daher die Aufgabe ein Spritzgussverfahren anzugeben, welches eine kostengünstige, einfache und qualitativ hochwertige Herstellung eines spritzgegossenen Verkleidungselementes für ein Kraftfahrzeug mit einer variantenbedingten lokalen Beheizung ermöglicht.

Zur Lösung dieser Aufgabe wird ein Spritzgussverfahren zur Herstellung eines spritzgegossenen Verkleidungselementes für ein Kraftfahrzeug vorgeschlagen, umfassend die folgenden Schritte:
- Bereitstellen eines Formwerkzeuges, das im geschlossenen Zustand zwischen mindestens zwei Formwerkzeugwandungen eine komplementär zu dem Verkleidungselement ausgebildete Kavität definiert, wobei in mindestens einer der Wandungen mindestens eine der Kavität zugewandte Ausnehmung vorgesehen ist,
- Abfragen einer bereitgestellten Information, ob variantenbedingt eine lokale Beheizung des Verkleidungselementes vorzusehen ist,
- Anordnen einer, mindestens eine erste Schicht aus einem ersten Kunststoffmaterial und mindestens eine Heizschicht aufweisenden Heizfolie in der Ausnehmung, für den Fall, dass variantenbedingt eine lokale Beheizung des Verkleidungselementes vorgesehen ist oder,
- Anordnen einer Kunststofffolie in der Ausnehmung für den Fall, dass variantenbedingt keine lokale Beheizung des Verkleidungselements vorgesehen ist,
- Schließen des Formwerkzeuges und Einspritzen eines plastifizierten thermoplastischen Kunststoffmaterials in die Kavität, welches nach dem Erstarren das Verkleidungselement bildet,
- Öffnen des Formwerkzeuges und Entnehmen des spritzgegossenen Verkleidungselements.

In vorteilhafter Weise wird in dem erfindungsgemäßen Verfahren dasselbe Formwerkzeug für mehrere Varianten eines spritzgegossenen Verkleidungselementes eingesetzt, nämlich eine Variante mit einer lokalen Beheizung des Verkleidungselementes und gleichzeitig für eine Variante, bei der keine lokale Beheizung des Verkleidungselementes vorgesehen ist. Mittels der ersten Schicht aus einem ersten Kunststoffmaterial der Heizfolie wird ein Stoffschluss zwischen dem eingespritzten plastifizierten thermoplastischen Kunststoffmaterial und der Heizfolie ermöglicht, so dass in besonders vorteilhafter Weise eine vollständig dichte und blasenfreie Anbindung der Heizfolie mit dem Verkleidungselement bereits bei der Herstellung des Verkleidungselementes erzielt wird. Hierdurch lassen sich nachfolgende Applikations- und Abdichtungsmaßnahmen, wie sie bisher im Stand der Technik notwendig waren, einsparen und zudem eine kontinuierlich gleichbleibende Qualität der Verbindung der Heizfolie mit dem Verkleidungselement erreichen. Das mit Wärmeenergie versehene in die Kavität eingespritzte plastifizierte thermoplastische Kunststoffmaterial, welches nach dem Erstarren das Verkleidungselement bildet, führt durch den Eintrag selbiger thermischer Energie zum Anschmelzen des ersten Kunststoffmaterials der ersten Schicht der Heizfolie und zu einem stoffschlüssigen Verschweißen dieser ersten Schicht mit dem entstehenden Verkleidungselement. Die Heizfolie kann alternativ so angeordnet werden, dass die erste Schicht der Ausnehmung zugewandt ist. Das eingespritzte plastifizierte thermoplastische Material kann sich dann direkt mit der Heizschicht (gegebenenfalls mittels einer darauf aufgebrachten Haftvermittlerschicht) oder mit einem oder mehreren nicht von der Heizschicht überlappten Abschnitten der ersten Schicht verbinden.

Für den Fall, dass keine lokale Beheizung des Verkleidungselementes vorgesehen ist, wird erfindungsgemäß in die entsprechende Ausnehmung in der Wandung des Formwerkzeuges keine Heizfolie sondern eine in den Abmessungen der Heizfolie vorzugsweise identische Kunststofffolie ohne eine Heizschicht eingelegt, welche sich analog mit dem entstehenden Verkleidungselement stoffschlüssig verbindet. Vorteilhaft ist hierbei, dass kein plastifiziertes thermoplastisches Material in den Bereich der Ausnehmung eingespritzt wird, da sich die dort bildende Materialanhäufung oder Aufdickung auf der Sichtseite des Verkleidungselementes abzeichnen würde. Dies resultiert aus der größeren Schwindung des dann größeren Materialvolumens der Aufdickung im Vergleich zu der Wanddicke des Verkleidungselementes im angrenzenden Bereich.

Alternativ kann ein Verschließen der Ausnehmung mittels eines verlagerbaren Formwerkzeugbereiches erfolgen, was jedoch nicht Teil der Erfindung ist.

Das erste Kunststoffmaterial der Heizfolie oder das Kunststoffmaterial der Kunststofffolie ist vorzugsweise so gewählt, dass es mit dem thermoplastischen Kunststoffmaterial verträglich ist, so dass während des Spritzgießens des Verkleidungselementes eine stoffschlüssige Verbindung zwischen der Heizfolie und dem Verkleidungselement oder zwischen der Kunststofffolie und dem Verkleidungselement entsteht. Alternativ oder ergänzend kann mittels einer Haftvermittlerschicht, welche auf der entsprechenden Folie aufgetragen ist oder wird, die Haftung mit dem thermoplastischen Kunststoffmaterial erreicht oder verbessert werden. Die erste Schicht kann auch nur durch eine Haftvermittlerschicht gebildet sein, das erste Kunststoffmaterial also durch den Haftvermittler gebildet sein.

Besonders bevorzugt weist die Heizfolie eine Sandwichstruktur mit der ersten Schicht, einer zweiten Schicht aus einem zweiten Kunststoffmaterial und der dazwischen eingebetteten Heizschicht auf. Alternativ oder ergänzend kann mittels einer Haftvermittlerschicht, welche auf der entsprechenden Folie aufgetragen ist oder wird, die Haftung mit dem thermoplastischen Kunststoffmaterial erreicht oder verbessert werden. Die zweite Schicht kann auch nur durch eine Haftvermittlerschicht gebildet sein, das zweite Kunststoffmaterial also durch den Haftvermittler gebildet sein.

Vorzugsweise ist das erste Kunststoffmaterial der ersten Schicht, das zweite Kunststoffmaterial der zweiten Schicht sowie das eingespritzte Kunststoffmaterial identisch bzw. aus der gleichen Kunststoffmaterialgruppe gewählt.

Besonders vorteilhaft kann bei einem Sandwichaufbau die zweite Schicht eine poröse und / oder geschäumte Struktur aufweisen. In diesem Fall ist die Heizfolie vorzugsweise so angeordnet, dass die zweite Schicht der Ausnehmung zugewandt ist. Im hergestellten Verkleidungselement ist die Heizschicht bzw. die Heizfolie in Folge so thermisch isoliert, dass die in der Heizschicht bzw. der Heizfolie entstehende Wärme primär in Richtung des Verkleidungselementes abgestrahlt wird und somit die Effizienz der lokalen Beheizung erheblich gesteigert wird. Gegebenenfalls kann es notwendig sein, für diese Fälle im Bereich der Ausnehmung eine im Vergleich zu den angrenzenden Bereichen des Formwerkzeugs erhöhte Kühlung des Formwerkzeuges vorzusehen, um durch die thermische Isolierung der porösen und / oder geschäumten Struktur eine Überhitzung der Heizschicht durch die Wärmeenergie des eingespritzten plastifizierten thermoplastischen Kunststoffmaterials zu vermeiden.

Die zweite Schicht kann um das 1,1-fache bis 20-fache dicker sein als die erste Schicht. Vorzugsweise wird für diesen Fall die Heizfolie so angeordnet, dass die zweite Schicht der Ausnehmung zugewandt ist. Die größere Dicke der zweiten Schicht dient ebenfalls der thermischen Isolierung der Heizschicht bzw. der Heizfolie, so dass die in der Heizschicht bzw. der Heizfolie entstehende Wärme primär in Richtung des Verkleidungselementes abgestrahlt wird und somit die Effizienz der lokalen Beheizung erheblich gesteigert wird.

Als ein alternatives erfindungsgemäßes Spritzgussverfahren kann das Kunststoffmaterial der Kunststofffolie so gewählt werden, dass es mit dem thermoplastischen Kunststoffmaterial unverträglich ist, so dass nach dem Spritzgießen des Verkleidungselements die Kunststofffolie von dem Verkleidungselement abziehbar ist. In vorteilhafterweise kann die Kunststofffolie dann recycelt bzw. sogar erneut innerhalb des Verfahrens eingesetzt werden. Vorzugsweise ist das Kunststoffmaterial der Kunststofffolie aus der Gruppe der Silikone oder aus der Gruppe der Fluorpolymere gewählt.

Die Dicke der Heizfolie oder die Dicke der Kunststofffolie entspricht vorzugsweise dem 0,5-fachen bis 1,5-fachen der Tiefe der Ausnehmung. Besonders bevorzugt entspricht die Dicke der Heizfolie oder die Dicke der Kunststofffolie dem 0,9-fachen bis 1,1-fachen der Tiefe der Ausnehmung, so dass der Schmelzefluss des eingespritzten plastifizierten thermoplatischen Kunststoffmaterials nur unwesentlich beeinflusst wird. Vorteilhafterweise können in diesem bevorzugten Dickenbereich der entsprechenden Folien die Abzeichnungen von Fließströmungen auf dem erstarrten Verkleidungselement effektiv vermieden werden.

Im Bereich der Ausnehmung kann mindestens eine Haltevorrichtung für die Heizfolie oder die Kunststofffolie vorgesehen sein. Besonders bevorzugt kann im Bereich der Ausnehmung mindestens eine mit einer Ansaugvorrichtung verbundene Ansaugöffnung vorgesehen sein. Alternativ oder in Kombination zu Ansaugöffnungen kann die Haltevorrichtungen eine magnetisch basierte Haltevorrichtung (elektromagnetisch oder dauermagnetisch), eine Steckverbindung, eine Vorrichtung auf Basis von Klettverschlüssen, eine Nadelverbindung oder eine Kombinationen der vorgenannten Möglichkeiten sein. Bei Verwendung einer Haltevorrichtung auf Basis von Klettverschlüssen, kann die an der Heizfolie verbleibende Klettverschlussseite zudem als Befestigungspunkt für weitere Anbauteile dienen, z.B. eine Kabelführung oder Kabelklemme. Gleiches gilt bei Steckverbindungen, die vorteilhafterweise gleichzeitig als späterer Anschluss zur Stromversorgung der Heizschicht verwendbar ist.

Vorzugsweise ist das Verkleidungselement eine Stoßfängerverkleidung, eine Kotflügelverkleidung, eine Schwellerverkleidung, eine Kühlerverkleidung, eine Motorhaubenverkleidung, eine Dachverkleidung, eine Heckklappenverkleidung, eine Rahmenverkleidung oder eine Türaußenverkleidung.

Weiterhin Teil der Erfindung ist ein Verkleidungselement aus einem thermoplastischen Kunststoffmaterial für ein Kraftfahrzeug, auf dessen der Sichtseite des Verkleidungselements gegenüberliegenden Rückseite mindestens eine Heizfolie mit mindestens einer ersten Schicht aus einem ersten Kunststoffmaterial und mindestens einer Heizschicht angeordnet ist, wobei die Heizfolie mittels eines Spritzgussverfahrens, insbesondere nach einem der Ansprüche 1 bis 10, über die erste Schicht stoffschlüssig mit dem Verkleidungselement verbunden ist. Die Vorteile eines erfindungsgemäßen Verkleidungselementes und mögliche Ausgestaltungen sind in vorstehender Beschreibung des Verfahrens offenbart. Ein erfindungsgemäßes Verkleidungselement weist eine gegenüber dem Stand der Technik deutlich verbesserte Abdichtung der Heizfolie vor Umwelteinflüssen auf und lässt sich zudem kostengünstig und in Großserie herstellen.

Teil der Erfindung ist zudem eine Anordnung mit einem eine elektromagnetische Strahlung aussendenden und / oder empfangenden Element und einem erfindungsgemäßen Verkleidungselement, wobei das Element so in Relation zu dem Verkleidungselement angeordnet ist, dass die Heizfolie im Betriebszustand den Durchstrahlungsbereich des Verkleidungselementes für die elektromagnetische Strahlung beheizt. Das eine elektromagnetische Strahlung aussendenden und / oder empfangenden Element kann eine Radareinheit sein, insbesondere eine Nahbereichsradareinheit (NBR), ein Short-Range-Radarsensor, ein Blind-Spot-Monitoring-Sensor, ein Multi-Mode-Sensor und/oder einen Forward-Collision-Warning-Sensor.

### Ausführungsbeispiele

Im Folgenden wird die Erfindung anhand lediglich Ausführungsbeispiele darstellender Zeichnungen erläutert.

Es zeigen schematisch:
- Fig.1: Querschnitte durch ein bereitgestelltes Formwerkzeug in verschiedenen Schritten des erfindungsgemäßen Verfahrens,
- Fig. 2: Querschnitte durch ein bereitgestelltes Formwerkzeug in verschiedenen Schritten des Verfahrens mit einem alternativen Verfahrensschritt,
- Fig. 3: einen Querschnitt durch ein bereitgestelltes Formwerkzeug mit einer alternativen Haltevorrichtung einer Heizfolie innerhalb der Ausnehmung,
- Fig. 4: einen Querschnitt durch ein bereitgestelltes Formwerkzeug mit einer weiteren alternativen Haltevorrichtung einer Heizfolie innerhalb der Ausnehmung,
- Fig. 5 a-c: Querschnitte durch ein bereitgestelltes Formwerkzeug mit einer alternativ ausgebildeten Heizfolie,
- Fig. 6: einen Querschnitt einer erfindungsgemäßen Anordnung.

In den Figuren werden gleiche oder funktionsgleiche Elemente mit den gleichen Bezugszeichen versehen.

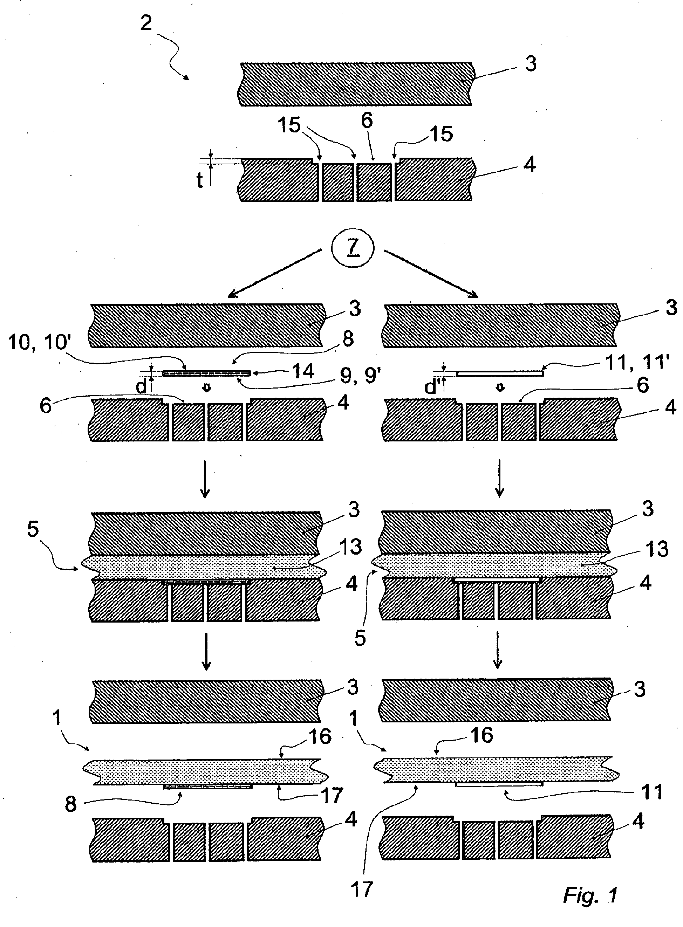

Die Fig. 1 zeigt einen erfindungsgemäßen Ablauf des Spritzgussverfahrens zur Herstellung eines spritzgegossenen Verkleidungselementes 1 für ein Kraftfahrzeug. Dargestellt ist in den verschiedenen Schritten des Spritzgussverfahrens jeweils eine schematische Schnittdarstellung durch das bereitgestellte Formwerkzeug 2, welches aus zwei Formwerkzeugwandungen 3, 4 besteht, welche aufeinander zu und voneinander weg verlagerbar sind. Der erste Schritt des erfindungsgemäßen Spritzgussverfahrens besteht im Bereitstellen des Formwerkzeuges 2, das im geschlossenen Zustand zwischen den zwei Formwerkzeugwandungen 3, 4 eine komplementär zu dem Verkleidungselement 1 ausgebildete Kavität 5 definiert. In der Formwerkzeugwandung 4 ist eine der Kavität 5 zugewandte Ausnehmung 6 vorgesehen. In einem nächsten Verfahrensschritt erfolgt die Abfrage einer bereitgestellten Information 7, ob eine lokale Beheizung des Verkleidungselements 1 vorzusehen ist. Infolge der abgefragten Information erfolgt als erste Alternative das Anordnen einer mindestens eine erste Schicht 10 aus einem ersten Kunststoffmaterial 10' und mindestens eine Heizschicht 14 aufweisenden Heizfolie 8 in der Ausnehmung 6 für den Fall, dass variantenbedingt eine lokale Beheizung des Verkleidungselements vorgesehen ist. Dies ist schematisch in dem linken Ast der Fig. 1 dargestellt. Alternativ erfolgt in Abhängigkeit der Abfrage der bereitgestellten Information 7 das Anordnen einer Kunststofffolie 11 in der Ausnehmung 6 für den Fall, dass variantenbedingt keine lokale Beheizung des Verkleidungselements 1 vorgesehen ist. Dies ist schematisch in dem rechten Ast der Fig. 1 dargestellt. In beiden Fällen wird durch das Schließen des Formwerkzeuges 2 und das Einspritzen eines plastifizierten thermoplastischen Kunststoffmaterials 13 in die Kavität 5, welches nach dem Erstarren das Verkleidungselement 1 bildet, selbiges im Spritzguss hergestellt. Zum Abschluss des Spritzgussverfahrens zur Herstellung eines spritzgegossenen Verkleidungselements 1 erfolgt das Öffnen des Formwerkzeugs 2 und das Entnehmen des spritzgegossenen Verkleidungselements 1 (dieser Schritt ist hier nicht näher dargestellt). Das erste Kunststoffmaterial 10' der Heizfolie 8 und das Kunststoffmaterial 11' der Kunststofffolie 11 sind so gewählt, dass es mit dem thermoplastischen Kunststoffmaterial 13 verträglich ist, so dass während des Spritzgießens des Verkleidungselements 1 eine stoffschlüssige Verbindung zwischen der Heizfolie 8 und dem Verkleidungselement 1 bzw. zwischen der Kunststofffolie 11 und dem Verkleidungselement 1 entsteht, je nachdem, ob variantenbedingt eine lokale Beheizung des Verkleidungselements 1 vorzusehen ist oder nicht. Als Alternative zu dem in Fig. 1 dargestellten Verfahrensablauf kann das Kunststoffmaterial 11' der Kunststofffolie 11 auch so gewählt werden, dass es mit dem thermoplastischen Kunststoffmaterial 13 unverträglich ist, so dass nach dem Spritzgießen des Verkleidungselements 1 die Kunststofffolie 11 von dem Verkleidungselement 1 abziehbar ist. Als unverträgliche Kunststoffmaterialgruppen haben sich insbesondere folgende Paarungen als vorteilhaft erwiesen: Polypropylen (PP) mit Acrylnitril-Butadien-Styrol (ABS), Polypropylen (PP) mit Polyethylen hoher Dichte (PE-HD), Polypropylen (PP) mit Polyamid (PA), Polypropylen (PP) mit Polytetrafluorethylen (PTFE) oder Polypropylen (PP) mit Kunststoffmaterial auf Basis von Silikon. Das einspritzbare thermoplastische Kunststoffmaterial 13 ist hierbei vorzugsweise das Polypropylen (PP). Die Abziehbarkeit der so ausgebildeten Kunststofffolie 11 meint hierbei, dass zum Entfernen der Kunststofffolie 11 von dem Verkleidungselement 1 eine vergleichsweise geringe Kraft notwendig ist bzw. keine zusätzlichen Werkzeuge erforderlich sind, die Folie also per Hand abziehbar ist. Vorteilhafterweise kann in diesem Fall die Kunststofffolie 11 mehrfach eingesetzt bzw. einem Recyclingprozess zugeführt und wieder in das Verfahren eingebracht werden. Die Dicke d der Heizfolie 8 oder die Dicke d' der Kunststofffolie 11 entspricht dem 0,5-fachen bis 1,5-fachen der Tiefe t der Ausnehmung 6. In dem in Fig. 1 gezeigten Ausführungsbeispiel entspricht die Dicke d der Heizfolie 8 und die Dicke d' der Kunststofffolie 11 dem Einfachen der Tiefe t der Ausnehmung 6, so dass die Heizfolie 8 bzw. die Kunststofffolie 11 nicht über die Formwerkzeugwandung 4 hervorsteht, sobald die entsprechende Folie in der Ausnehmung 6 angeordnet ist. Im Bereich der Ausnehmung 6 sind mehrere Haltevorrichtungen 15 vorgesehen, die in diesem Ausführungsbeispiel als mit einer Ansaugvorrichtung verbundene Ansaugöffnungen 15 für die Heizfolie 8 oder die Kunststofffolie 11 ausgebildet sind.

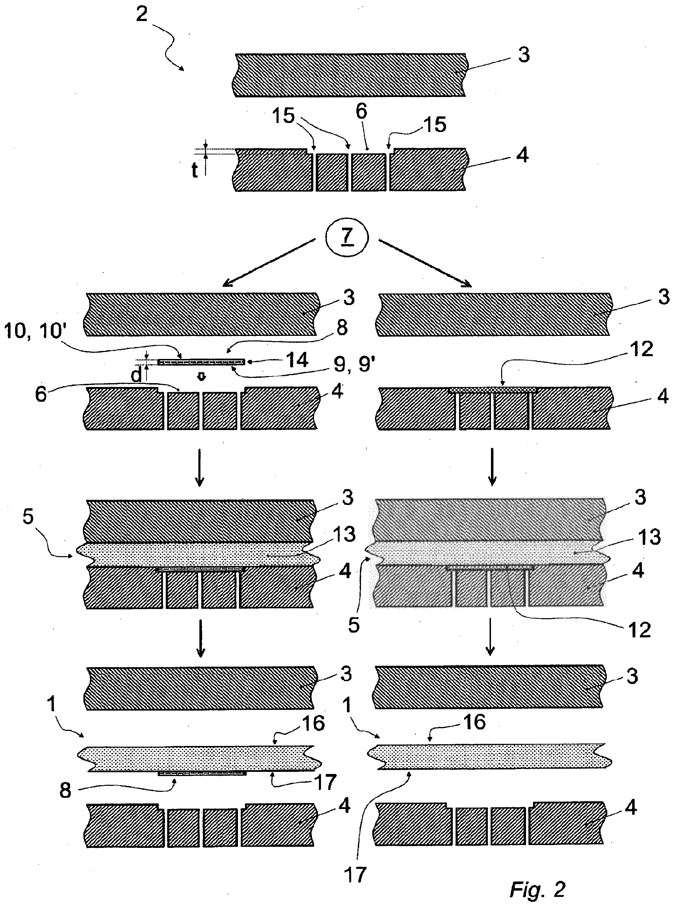

Die Fig. 2 zeigt eine weitere Variante des Spritzgussverfahrens zur Herstellung eines spritzgegossenen Verkleidungselementes 1 für ein Kraftfahrzeug. In Fig. 2 sind ebenfalls verschiedene Verfahrensschritte schematisch mit einem im Querschnitt dargestellten Formwerkzeug 2 dargestellt. Analog zu Fig. 1 erfolgt nach dem Abfragen einer bereitgestellten Information 7, ob variantenbedingt eine lokale Beheizung des Verkleidungselementes 1 vorzusehen ist, als erste Alternative das vorstehend beschriebene Anordnen einer mindestens eine erste Schicht 10 aus einem ersten Kunststoffmaterial 10' und mindestens eine Heizschicht 14 aufweisenden Heizfolie 8 in der Ausnehmung 6 für den Fall, dass variantenbedingt eine lokale Beheizung des Verkleidungselementes vorgesehen ist (vgl. linker Ast der Fig. 2). In Abweichung zu Fig. 1 erfolgt nach der Abfrage einer bereitgestellten Information 7, ob variantenbedingt eine lokale Beheizung des Verkleidungselementes 1 vorzusehen ist für den Fall, dass diese Beheizung nicht vorzusehen ist, das Verschließen der Ausnehmung 6 mittels eines verlagerbaren Formwerkzeugbereiches 12. Das Verschließen der Ausnehmung 6 mittels eines verlagerbaren Formwerkzeugbereiches 12 kann über einen seitlich einfahrenden Formwerkzeugbereich 12 in Form eines Schiebers und / oder ein sich in Richtung der Kavität 5 verlagernden Formwerkzeugbereich 12 oder durch das Einlegen eines metallischen Formwerkzeugbereiches 12 mittels eines Handlingsystems (z. B. eines Roboters) oder per Hand erfolgen.

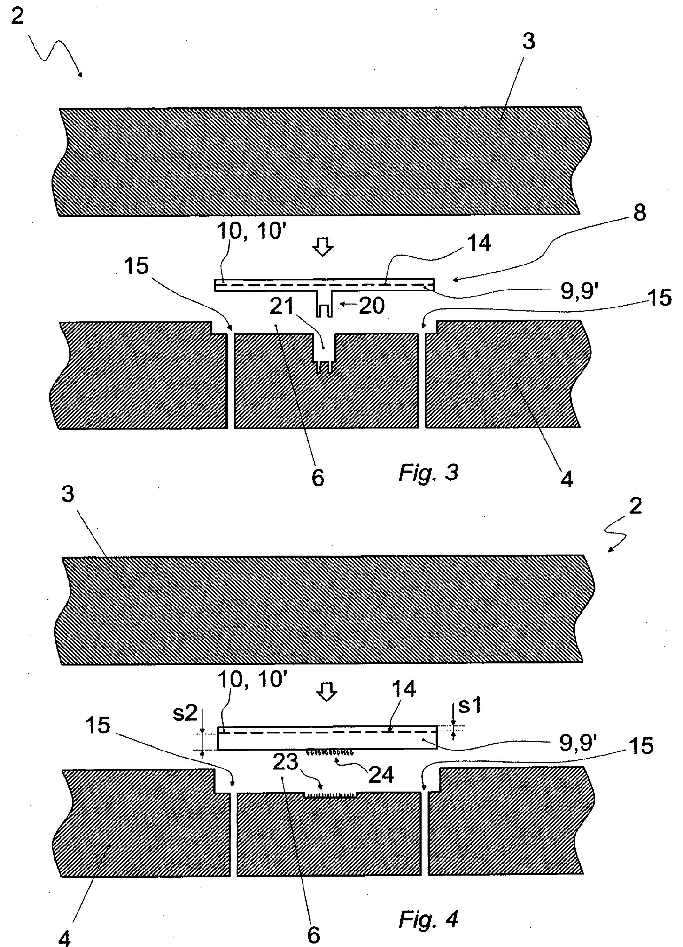

In Fig. 3 ist eine weitere Variante eines bereitzustellenden Formwerkzeuges 2 in einem schematischen Querschnitt dargestellt. Im Bereich der Ausnehmung 6 ist eine Haltevorrichtung 21 in Form einer Steckeraufnahme 21 vorgesehen. Der entsprechende Stecker 20 ist an der Heizfolie 8 angeformt, so dass beim Verbinden des Steckers 20 mit der Steckeraufnahme 21 die Heizfolie 8 innerhalb der Ausnehmung 6 gehalten wird. Die Heizfolie 8 weist eine Sandwich-Struktur mit der ersten Schicht 10 sowie einer zweiten Schicht 9 aus einem zweiten Kunststoffmaterial 9' und der dazwischen eingebetteten Heizschicht 14 auf. Die Heizfolie 8 wird so angeordnet, dass die zweite Schicht 9 der Ausnehmung 6 zugewandt ist. Neben der Steckverbindung 20, 21 sind im Bereich der Ausnehmung 6 ferner zwei mit einer Ansaugvorrichtung verbundene Ansaugöffnungen 15 für die Heizfolie 8 bzw. die hier nicht dargestellte Kunststofffolie 11 vorgesehen. Der Stecker 20 kann vorteilhafterweise nach der Herstellung des Verkleidungselementes 1 zur Kontaktierung bzw. Bestromung der Heizfolie 8 genutzt werden.

Als weitere Alternative zeigt Fig. 4 eine der Fig. 3 vergleichbare Querschnittsdarstellung, wobei jedoch als Haltevorrichtung im Bereich der Ausnehmung 6 eine Klettverbindung 23, 24 vorgesehen ist. Ein erster Teil 23 dieser Klettverbindung ist mit der Formwerkzeugwandung 4 verbunden, während der mit diesem ersten Teil 23 verbindbare zweite Teil 24 der Klettverbindung 23, 24 an der Heizfolie 8 angeformt ist. Vorteilhafterweise kann der zweite Teil 24 der Klettverbindung nach Abschluss des erfindungsgemäßen Spritzgussverfahrens zur Befestigung von z. B. Kabeln erneut verwendet werden. Beispiele für Klettverbindungen können 3M Dual Lock™ oder 3M Scotchmate™ sein. Die zweite Schicht 9 ist in diesem Ausführungsbeispiel um das 1,1-fache bis 20-fache dicker als die erste Schicht 10, um eine thermische Isolierung der Heizschicht 14 der Heizfolie 8 zu erreichen, die eine Abstrahlung von Wärme in Richtung weg von dem Verkleidungsteil 1 verringert.

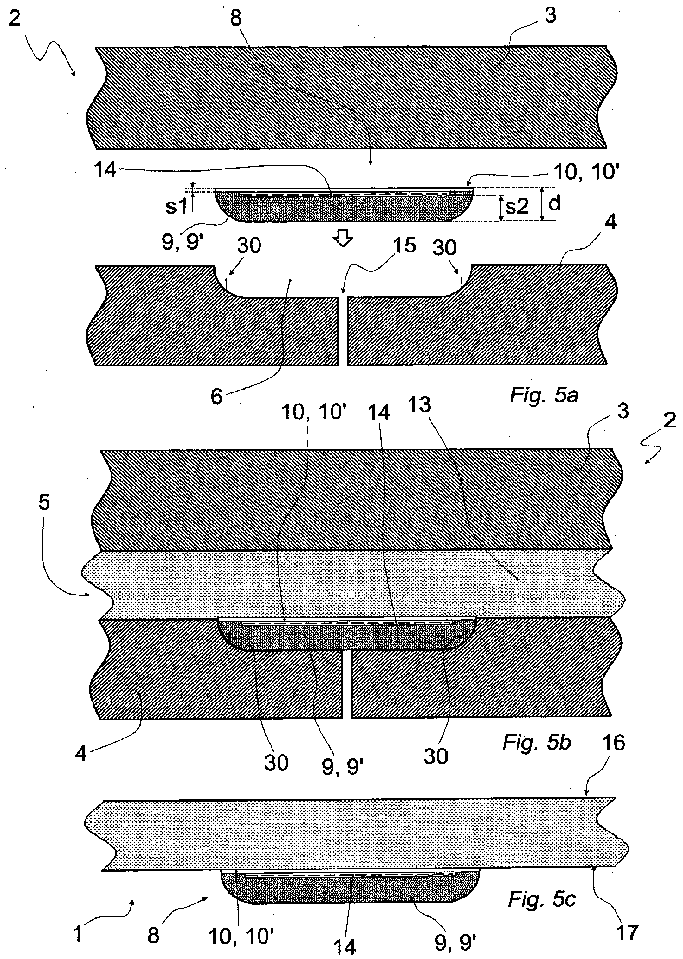

Die Fig. 5 zeigt eine weitere Variante des erfindungsgemäßen Spritzgussverfahrens zur Herstellung eines spritzgegossenen Verkleidungselementes 1 für ein Kraftfahrzeug. In Fig. 5a bis 5c sind ebenfalls verschiedene Verfahrensschritte schematisch mit einem im Querschnitt dargestellten Formwerkzeug 2 dargestellt. Die Fig. 5a zeigte eine weitere Variante in einer schematischen Querschnittsdarstellung eines bereitgestellten Formwerkzeuges 2. Im Bereich der Ausnehmung 6 sind Haltevorrichtungen 30 vorgesehen, welche als vorstehende Nadeln 30 ausgebildet sind. Eine in der Ausnehmung 6 anzuordnende Heizfolie 8 weist eine Sandwich-Struktur mit der ersten Schicht 10 und einer zweiten Schicht 9 aus einem zweiten Kunststoffmaterial 9' und der dazwischen eingebetteten Heizschicht 14 auf. Die zweite Schicht 9 weist eine poröse und / oder geschäumte Struktur auf. In diese geschäumte Struktur können die innerhalb der Ausnehmung 6 vorstehenden Nadeln 30 eindringen und somit die Heizfolie 8 innerhalb der Ausnehmung 6 haltern (vgl. Fig. 5b). Zusätzlich ist mindestens eine mit einer Ansaugvorrichtung verbundene Ansaugöffnung 15 vorgesehen. Die Gesamtdicke d der Heizfolie 8 entspricht dem 1,1-fachen der Tiefe t der Ausnehmung 6. Dies vor dem Hintergrund, dass der entstehende Druck durch das in die Kavität eingespritzte plastifizierte thermoplastische Kunststoffmaterial 13 die poröse und / oder geschäumte zweite Schicht 9 komprimiert und in Folge sich die Dicke d während dieses Verfahrensschrittes verringert. Ziel ist es hierbei, dass die Heizfolie 8 in diesem Verfahrensschritt möglichst flächenbündig in der Formwerkzeugwandung 4 angeordnet ist und entsprechend vor der Druckaufbringung in die Kavität 5 vorsteht. Nach dem nicht näher dargestellten Öffnen des Formwerkzeugs 2 und dem Entnehmen des spritzgegossenen Verkleidungselements 1 hat sich die erste Schicht 10 stoffschlüssig mit dem Verkleidungselement 1 verbunden (vgl. Fig. 5c). Die poröse und / oder geschäumte zweite Schicht 9 ist so ausgebildet, dass die in der Heizschicht 14 entstehende Wärme verringert weg von dem Verkleidungselement 1 abgestrahlt wird, sondern die Wärmeabstrahlung der Heizfolie 8 bzw. der Heizschicht 14 auf die Sichtseite 16 des Verkleidungselementes 1 konzentriert wird.

Das in den vorstehenden Ausführungsbeispielen herstellbare Verkleidungselement 1 kann eine Stoßfängerverkleidung, eine Kotflügelverkleidung, eine Schwellerverkleidung, eine Kühlerverkleidung, eine Motorhaubenverkleidung, eine Dachverkleidung, eine Heckklappenverkleidung, eine Rahmenverkleidung oder eine Türaußenverkleidung sein. So entsteht ein Verkleidungselement 1 für ein Kraftfahrzeug, auf dessen der Sichtseite 16 des Verkleidungselements 1 gegenüberliegenden Rückseite 17 mindestens eine Heizfolie 8 mit mindestens einer ersten Schicht 10 aus einem ersten Kunststoffmaterial 10' und mindestens einer Heizschicht 14 angeordnet ist, wobei die Heizfolie 8 mittels eines Spritzgussverfahrens, insbesondere nach einem der vorstehend beschriebenen Spritzgussverfahren, über die erste Schicht 10 stoffschlüssig mit dem Verkleidungselement 1 verbunden ist.

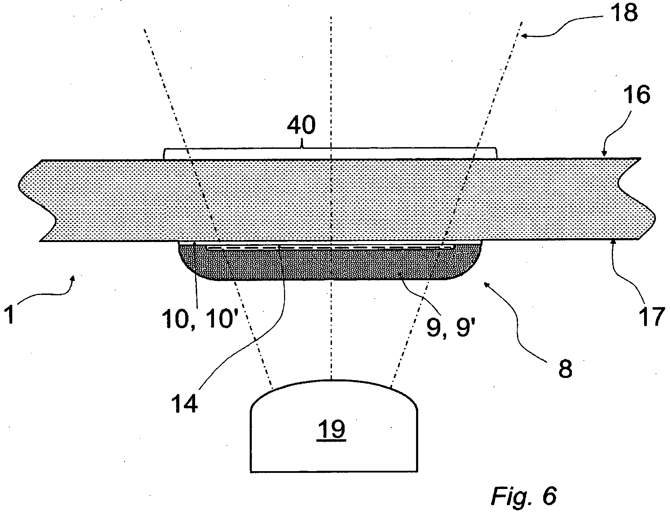

Die Fig. 6 zeigt eine Anordnung mit einem eine elektromagnetische Strahlung 18 aussendenden und / oder empfangenden Element 19 und einem Verkleidungselement 1. Das Element 19 ist so in Relation zu dem Verkleidungselement 1 angeordnet, dass die Heizfolie 8 im Betriebszustand den Durchstrahlungsbereich 40 des Verkleidungselements 1 für die elektromagnetische Strahlung 18 beheizt. Bei dem Element 19 handelt es sich um eine Radarsende- und Empfangseinheit, insbesondere eine Nahbereichsradareinheit (NBR), ein Short-Range-Radarsensor, ein Blind-Spot-Monitoring-Sensor, ein Multi-Mode-Sensor und/oder einen Forward-Collision-Warning-Sensor.

## Patentansprüche

1. Spritzgussverfahren zur Herstellung eines spritzgegossenen Verkleidungselementes (1) für ein Kraftfahrzeug, umfassend die folgenden Schritte:
- Bereitstellen eines Formwerkzeuges (2), das im geschlossenen Zustand zwischen mindestens zwei Formwerkzeugwandungen (3, 4) eine komplementär zu dem Verkleidungselement (1) ausgebildete Kavität (5) definiert, wobei in mindestens einer der Wandungen (4) mindestens eine der Kavität (5) zugewandte Ausnehmung (6) vorgesehen ist, wobei dasselbe Formwerkzeug für mehrere Varianten eines spritzgegossenen Verkleidungselementes eingesetzt wird, nämlich eine Variante mit einer lokalen Beheizung des Verkleidungselementes und gleichzeitig für eine Variante, bei der keine lokale Beheizung des Verkleidungselementes vorgesehen ist,
- Abfragen einer bereitgestellten Information (7), ob variantenbedingt eine lokale Beheizung des Verkleidungselementes (1) vorzusehen ist,
- Anordnen einer, mindestens eine erste Schicht (10) aus einem ersten Kunststoffmaterial (10') und mindestens eine Heizschicht (14) aufweisenden Heizfolie (8) in der Ausnehmung (6), für den Fall, dass variantenbedingt eine lokale Beheizung des Verkleidungselementes (1) vorgesehen ist, oder
- Anordnen einer Kunststofffolie (11) in der Ausnehmung (6) für den Fall, dass variantenbedingt keine lokale Beheizung des Verkleidungselementes (1) vorgesehen ist,
- Schließen des Formwerkzeuges (2) und Einspritzen eines plastifizierten thermoplastischen Kunststoffmaterials (13) in die Kavität (5), welches nach dem Erstarren das Verkleidungselement (1) bildet,
- Öffnen des Formwerkzeuges (2) und entnehmen des spritzgegossenen Verkleidungselementes (1).

2. Verfahren nach Anspruch 1, **dadurch gekennzeichnet, dass** das ersten Kunststoffmaterial (10') der Heizfolie (8) oder das Kunststoffmaterial (11') der Kunststofffolie (11) so gewählt wird, dass es mit dem thermoplastische Kunststoffmaterial (13) verträglich ist, so dass während des Spritzgießens des Verkleidungselementes (1) eine stoffschlüssige Verbindung zwischen der Heizfolie (8) und dem Verkleidungselement (1) oder zwischen der Kunststofffolie (11) und dem Verkleidungselement (1) entsteht.

3. Verfahren nach einem der Ansprüche 1 oder 2, **dadurch gekennzeichnet, dass** die Heizfolie (8) eine Sandwichstruktur mit der ersten Schicht (10), einer zweiten Schicht (9) aus einem zweiten Kunststoffmaterial (9') und der dazwischen eingebetteten Heizschicht (14) aufweist.

4. Verfahren nach einem der vorstehenden Ansprüche, **dadurch gekennzeichnet, dass** die erste Schicht (10) und / oder die zweite Schicht (9) eine poröse und / oder geschäumte Struktur aufweist.

5. Verfahren nach Anspruch 3 oder 4, **dadurch gekennzeichnet, dass** die zweite Schicht (9) um das 1,1 fache bis 20 fache dicker ist als die erste Schicht (10).

6. Verfahren nach einem der Ansprüche 3 bis 5, **dadurch gekennzeichnet, dass** die Heizfolie (8) so angeordnet wird, dass die zweite Schicht (9) der Ausnehmung (6) zugewandt ist.

7. Verfahren nach Anspruch 1, **dadurch gekennzeichnet, dass** das Kunststoffmaterial (11') der Kunststofffolie (11) so gewählt wird, dass es mit dem thermoplastische Kunststoffmaterial (13) unverträglich ist, so dass nach dem Spritzgießen des Verkleidungselementes (1) die Kunststofffolie (11) von dem Verkleidungselement (1) abziehbar ist.

8. Verfahren nach einem der vorstehenden Ansprüche, **dadurch gekennzeichnet, dass** die Dicke (d) der Heizfolie (8) oder die Dicke (d') der Kunststofffolie (11) dem 0,5-fachen bis 1,5fachen der Tiefe (t) der Ausnehmung (6) entspricht.

9. Verfahren nach einem der vorstehenden Ansprüche, **dadurch gekennzeichnet, dass** im Bereich der Ausnehmung (6) mindestens eine Haltevorrichtung (15, 21, 23, 30), insbesondere eine mit einer Ansaugvorrichtung verbundene Ansaugöffnung (15), für die Heizfolie (8) oder die Kunststofffolie (11) vorgesehen ist.

10. Verfahren nach einem der vorstehenden Ansprüche, **dadurch gekennzeichnet, dass** das Verkleidungselement (1) eine Stoßfängerverkleidung, eine Kotflügelverkleidung, eine Schwellerverkleidung, eine Kühlerverkleidung, eine Motorhaubenverkleidung, eine Dachverkleidung, eine Heckklappenverkleidung, eine Rahmenverkleidung oder eine Türaußenverkleidung ist.

## Claims

1. Injection moulding method for producing an injection-moulded cladding element (1) for a motor vehicle, comprising the following steps:
- providing a mould (2), which in the closed state defines between at least two mould walls (3, 4) a cavity (5) formed in such a way as to complement the cladding element (1), wherein at least one recess (6), facing the cavity (5), is provided in at least one of the walls (4), wherein the same mould is used for a number of variants of an injection-moulded cladding element, to be specific a variant with local heating of the cladding element and at the same time for a variant in which no local heating of the cladding element is provided,
- calling up information (7) provided as to whether, according to the variant, local heating of the cladding element (1) is to be provided,
- arranging a heating film (8), comprising at least one first layer (10) of a first plastics material (10') and at least one heating layer (14), in the recess (6) for the case where, according to the variant, local heating of the cladding element (1) is provided, or
- arranging a plastic film (11) in the recess (6) for the case where, according to the variant, no local heating of the cladding element (1) is provided,
- closing the mould (2) and injecting into the cavity (5) a plasticized thermoplastic material (13), which after solidifying forms the cladding element (1),
- opening the mould (2) and removing the injection-moulded cladding element (1).

2. Method according to Claim 1, **characterized in that** the first plastics material (10') of the heating film (8) or the plastics material (11') of the plastic film (11) is chosen such that it is compatible with the thermoplastic material (13), so that, during the injection-moulding of the cladding element (1), a material bond is produced between the heating film (8) and the cladding element (1) or between the plastic film (11) and the cladding element (1).

3. Method according to either of Claims 1 and 2, **characterized in that** the heating film (8) has a sandwich structure comprising the first layer (10), a second layer (9) of a second plastics material (9') and the heating layer (14) embedded in between.

4. Method according to one of the preceding claims, **characterized in that** the first layer (10) and/or the second layer (9) has a porous and/or foamed structure.

5. Method according to Claim 3 or 4, **characterized in that** the second layer (9) is 1.1 to 20 times thicker than the first layer (10).

6. Method according to one of Claims 3 to 5, **characterized in that** the heating film (8) is arranged in such a way that the second layer (9) is facing the recess (6).

7. Method according to Claim 1, **characterized in that** the plastics material (11') of the plastic film (11) is chosen such that it is incompatible with the thermoplastic material (13), so that, after the injection-moulding of the cladding element (1), the plastic film (11) can be pulled off from the cladding element (1).

8. Method according to one of the preceding claims, **characterized in that** the thickness (d) of the heating film (8) or the thickness (d') of the plastic film (11) corresponds to 0.5 to 1.5 times the depth (t) of the recess (6).

9. Method according to one of the preceding claims, **characterized in that** at least one holding device (15, 21, 23, 30), in particular a suction opening (15) that is connected to a suction device, for the heating film (8) or the plastic film (11) is provided in the region of the recess (6).

10. Method according to one of the preceding claims, **characterized in that** the cladding element (1) is a bumper fascia, a wing panel, a door-sill trim, a radiator grille, an engine cowling, a roofliner, a tailgate moulding, a frame covering or an outer door panelling.

## Revendications

1. Procédé de moulage par injection servant à fabriquer un élément d'habillage (1) moulé par injection pour véhicule automobile, le procédé comportant les étapes suivantes :
- préparation d'un outil de moulage (2) qui, à l'état fermé, définit entre au moins deux parois (3, 4) d'outil de moulage une cavité (5) de configuration complémentaire de celle de l'élément d'habillage (1), au moins une découpe (6) tournée vers le cavité (5) étant prévue dans au moins une des parois (4), le même outil de moulage étant utilisé pour plusieurs variantes d'un élément d'habillage moulé par injection, à savoir une variante qui prévoit un chauffage local de l'élément d'habillage et variante qui ne prévoit pas de chauffage de l'élément d'habillage,
- demande d'une information (7) disponible indiquant si la variante prévoit un chauffage local de l'élément d'habillage (1),
- placement dans la découpe (6) d'une feuille chauffante (8) qui présente au moins une première couche (10) en une première matière synthétique (10') et au moins une couche chauffante (14) au cas où la variante un prévoit chauffage local de l'élément d'habillage (1) ou
- placement dans la découpe (6) d'une feuille (11) en matière synthétique au cas où la variante ne prévoit pas de chauffage local de l'élément d'habillage (1),
- fermeture de l'outil de moulage (2) et injection dans la cavité (5) d'une matière synthétique thermoplastique plastifiante (13) qui forme un élément d'habillage (1) après solidification,
- ouverture de l'outil de moulage (2) et enlèvement de l'élément d'habillage (1) moulé par injection.

2. Procédé selon la revendication 1, **caractérisé en ce que** la première matière synthétique (10') sélectionnée pour la feuille chauffante (8) ou la matière synthétique (11') sélectionnée pour la feuille (11) de matière synthétique sont compatibles avec la matière synthétique thermoplastique (13) de telle sorte que pendant le moulage par injection de l'élément d'habillage (1), on obtienne une liaison en correspondance de matière entre la feuille chauffage (8) et l'élément d'habillage (1) ou entre la feuille (11) de matière synthétique et l'élément d'habillage (1).

3. Procédé selon l'une des revendications 1 ou 2, **caractérisé en ce que** la feuille chauffante (8) présente une structure en sandwich dotée d'une première couche (10) et d'une deuxième couche (9) en une deuxième matière synthétique (9') avec la couche chauffante (14) incorporée entre elles.

4. Procédé selon l'une des revendications précédentes, **caractérisé en ce que** la première couche (10) et/ou la deuxième couche (9) présentent une structure poreuse et/ou une structure moussée.

5. Procédé selon les revendications 3 ou 4, **caractérisé en ce que** la deuxième couche (9) est de 1,1 fois à 20 fois plus épaisse que la première couche (10).

6. Procédé selon l'une des revendications 3 à 5, **caractérisé en ce que** la feuille chauffante (8) est disposée de telle sorte que la deuxième couche (9) soit tournée vers la découpe (6).

7. Procédé selon la revendication 1, **caractérisé en ce que** la matière synthétique (11') sélectionnée pour la feuille (11) en matière synthétique n'est pas compatible avec la matière synthétique thermoplastique (13), de telle sorte qu'après le moulage par injection de l'élément d'habillage (1), la feuille (11) en matière synthétique puisse être détachée de l'élément d'habillage (1).

8. Procédé selon l'une des revendications précédentes, **caractérisé en ce que** l'épaisseur (d) de la feuille chauffante (8) ou l'épaisseur (d') de la feuille (11) en matière synthétique représentent de 0,5 fois à 1,5 fois la profondeur (t) de la découpe (6).

9. Procédé selon l'une des revendications précédentes, **caractérisé en ce qu'**au moins un ensemble de maintien (15, 21, 23, 30), en particulier une ouverture d'aspiration (15) reliée à un ensemble d'aspiration, pour la feuille chauffante (8) ou la feuille (11) en matière synthétique, est prévu au niveau de la découpe (6).

10. Procédé selon l'une des revendications précédentes, **caractérisé en ce que** l'élément d'habillage (1) est un habillage de pare-choc, un habillage de garde-boue, un habillage de seuil, un habillage de refroidisseur, un habillage de capot moteur, un habillage de toit, un habillage de hayon arrière, un habillage d'encadrement ou un habillage extérieur de porte.
